**Europäisches Patentamt**

**European Patent Office**

**Office européen des brevets**

(19)

(11) Veröffentlichungsnummer: **0 139 129**
**B1**

(12) **EUROPÄISCHE PATENTSCHRIFT**

(45) Veröffentlichungstag der Patentschrift:
**19.11.87**

(51) Int. Cl.⁴: **B 23 B 31/10**

(21) Anmeldenummer: **84109381.8**

(22) Anmeldetag: **08.08.84**

(54) **Spannfutter.**

(30) Priorität: **12.10.83 DE 3337047**

(43) Veröffentlichungstag der Anmeldung:
**02.05.85 Patentblatt 85/18**

(45) Bekanntmachung des Hinweises auf die Patenterteilung:
**19.11.87 Patentblatt 87/47**

(84) Benannte Vertragsstaaten:
**DE FR GB IT SE**

(56) Entgegenhaltungen:
**CH - A - 80 644**
**DE - B - 2 104 904**
**DE - B - 2 218 637**
**DE - B - 2 610 587**
**US - A - 3 190 666**

(73) Patentinhaber: **SMW Schneider & Weisshaupt GmbH,**
**Wiesentalstrasse 28, D-7996 Meckenbeuren (DE)**

(72) Erfinder: **Hiestand, Karl, Mühlweg 2, D-7798 Pfullendorf**
**(DE)**

(74) Vertreter: **Engelhardt, Guido, Dipl.-Ing.,**
**Montafonstrasse 35 Postfach 1350,**
**D-7990 Friedrichshafen 1 (DE)**

ACTORUM AG

## Beschreibung

Die Erfindung bezieht sich auf ein Spannfutter mit im Futterkörper verstellbar geführten Grundbacken, die durch eine Radialverschiebung mit zugeordneten Aufsatzspannbacken formschlüssig verbindbar sind.

Durch die DE-PS- 21 04 904 ist eine Spannvorrichtung für Drehmaschinen mit Schnellwechsel der Aufsatzspannbacken von den Grundbacken bekannt geworden, wobei durch Radialverschiebung der Grundbacken diese mit den Aufsatzspannbacken koppelbar sind. Bei dieser Ausgestaltung ist jeweils in die den Aufsatzspannbacken zugekehrten Aussenflächen der Grundbacken eine Längsnut eingearbeitet, deren Seitenflächen durchbrochene Längsrippen, Spitzverzahnungen oder dgl. aufweisen, und die Aufsatzspannbacken tragen rückseitig Passfedern, die ebenfalls mit seitlich durchbrochenen Längsrippen, Spitzverzahnungen oder dgl. versehen sind. Die Aussparungen der Spitzverzahnungen sind derart bemessen, dass die Passfeder durch eine Bewegung in Achsrichtung des Spannfutters in die Längsnut der Grundbacke eingeführt werden kann. Durch eine nachfolgende Radialverschiebung der Grundbacke ist diese formschlüssig mit der Aufsatzspannbacke verbindbar.

Um die an den Grundbacken vorgesehenen Spitzverzahnungen bearbeiten zu können, sind gesonderte Leisten notwendig, die auf die Grundbacken aufzuschrauben sind. Und da auch die an den Aufsatzspannbacken angebrachten Passfedern mittels Schrauben befestigt sind, ist eine hohe Instabilität unvermeidbar. Des weiteren ist der Aufwand zur Herstellung der aufeinander abgestimmten Spitzverzahnungen sehr gross, auch ist eine hohe Genauigkeit, um die Verzahnungen einführen und ineinander verschieben zu können, unumgänglich. Vor allem aber ist hierbei von Nachteil, dass die Aufsatzspannbacken sich in Drehrichtung nur über die Passfedern an den Grundbacken abstützen und nahezu ausschliesslich über die seitlichen Verzahnungen mit diesen verbunden sind. Die Spannkräfte können somit nur über die Verzahnungsflanken, deren Flächen klein bemessen sind, übertragen werden. Dadurch können mitunter durch die hohen Kippmomente Beschädigungen der Verzahnungen hervorgerufen werden. Ausserdem ist beim Ein- und Auskuppeln der Verzahnungen ein verhältnismässig grosser Verstellweg erforderlich, auch ist die Bauhöhe, bedingt durch die aufgeschraubten Leisten, gross und in den Verzahnungen kann sich leicht Schmutz absetzen.

Aufgabe der Erfindung ist es daher, ein Spannfutter mit im Futterkörper verstellbar geführten Grundbacken der vorgenannten Art zu schaffen, bei dem nicht nur eine ausserordentlich gute Abstützung der Aufsatzspannbacke bei hoher Stabilität gewährleistet ist, sondern das auch ohne Schwierigkeiten in wirtschaftlicher Weise gefertigt werden kann und bei dem das Verbinden einer Aufsatzspannbacke mit einer Grundbacke leicht zu bewerkstelligen ist. Die Aufsatzspannbacke soll hierbei des weiteren unmittelbar an der Grundbacke abgestützt und seitlich geführt sein, so dass auch hohe Kräfte, ohne dass Beschädigungen auftreten, von der Aufsatzspannbacke aufgenommen werden können. Auch sollen der Verstellweg, um eine Aufsatzspannbacke mit einer Grundbacke zu verbinden, gering und die axiale Bauhöhe klein gehalten werden, vor allem aber soll erreicht werden, dass, ohne bauliche Veränderungen vornehmen zu müssen, eine Innen- oder Aussenspannung möglich und eine hohe Wiederholspanngenauigkeit gegeben sind.

Gemäss der Erfindung wird dies dadurch erreicht, dass die Grundbacke einen in Achsrichtung des Futterkörpers abstehenden etwa mittig angeordneten, vorzugsweise zylindrisch ausgebildeten Ansatz aufweist, an dem eine Anschlagfläche sowie ein achssenkrecht nach innen und aussen abstehender Vorsprung in Form einer Rastnase angebracht ist, dass in die Aufsatzspannbacke eine den Ansatz aufnehmende langlochartige, seitlich geschlossene Aussparung eingearbeitet ist, die auf einer der sich senkrecht zu der Verstellrichtung der Grundbacke erstreckenden Fläche mit einer den Vorsprung des Ansatzes aufnehmenden Hinterschneidung und mit einer mit der Anschlagfläche des Ansatzes zusammenwirkenden Gegenfläche versehen ist, und dass die Aufsatzspannbacke in einer in den Futterkörper eingearbeiteten Nut, vorzugsweise in der die Grundbacke aufnehmenden Ausnehmung des Futterkörpers, und/oder in einer die Grundbacke eingearbeiteten parallel zur Nut im Futterkörper verlaufenden Nut drehfest gehalten ist.

Zweckmässig ist es hierbei, zur Arretierung der Aufsatzspannbacke in Koppelstellung in diese und/oder die Grundbacke eine durch die Kraft einer Feder axial verstellbare Kugel, einen Stift oder dgl. einzusetzen und in eine in die andere Backe eingearbeitete Ausnehmung einzurasten. Auf diese Weise ist die Aufsatzspannbacke leicht zu verriegeln, so dass ein selbsttätiges Lösen der Verbindung zwischen diesem und der Grundbacke ausgeschlossen ist.

Der an der Grundbacke angebrachte Ansatz ist in sehr einfacher Ausgestaltung durch einen angearbeiteten oder an der Grundbacke befestigten Bolzen mit kreisförmigem Querschnitt oder durch einen Grundkörper mit ovalen Querschnitt zu bilden und der parallel zur Grundbacke gerichtete Vorsprung ist durch einen von diesem abstehenden Bund mit kreisförmigem bzw. ovalem Querschnitt zu bilden, wobei die den Bund des Ansatzes teilweise aufnehmende Hinterschneidung der in die Aufsatzspannbacke eingearbeiteten Aussparung durch eine kreisförmige Eindrehung hergestellt werden kann. Ein derartig ausgebildeter Ansatz ist leicht zu fertigen, auch erstreckt sich die Hinterschneidung in radialer Richtung, so dass eine sichere Abstützung gewährleistet ist.

Nach einer andersartigen Ausgestaltung können der an der Grundbacke angebrachte Ansatz und der von diesem abstehende Vorsprung im Querschnitt rechteckig ausgebildet werden.

Um die Abstützfläche zu vergrössern, kann nach einer Weiterbildung die Grundbacke auch mit zwei in Achrichtung abstehenden mit seitlichem Abstand zueinander angeordneten Ansätzen und an diesen angeformten Vorsprüngen und die Aufsatzspannbacke mit die Vorsprünge aufnehmenden Hinterschneidungen versehen werden.

Zweckmässig ist es ferner, die Aufsatzspannbakke in Form einer Kassette auszubilden, an der ein in Spannrichtung abgestützer Backeneinsatz auswechselbar befestigt ist.

Das gemäss der Erfindung ausgebildete Spannfutter ist äusserst einfach in der konstruktiven Ausgestaltung und damit auf wirtschaftliche Weise zu fertigen, leicht zu handhaben und gewährleistet aber dennoch eine stets betriebssichere Halterung einer Aufsatzspannbacke auf einer Grundbacke. Wird nämlich die Grundbacke mit einem abstehenden, mit einem Rastvorsprung versehen Ansatz ausgestattet und wird in der im Futterkörper zu führenden Aufsatzspannbacke eine diesen aufnehmende Ausnehmung eingearbeitet, die mit einer Hinterschneidung versehen ist, so ist es ohne Schwierigkeiten möglich, die beiden Backen durch eine kurze Radialverschiebung miteinander zu koppeln. Die Aufsatzspannbacke ist durch diese Art der Verbindung in Spannrichtung unmittelbar an der Grundbacke, und zwar auf einer grossen Fläche, und in Drehrichtung an dem Futterkörper des Spannfutters abgestützt, so dass auch hohe Kräfte, ohne dass die Gefahr besteht, dass Beschädigungen auftreten, zu übertragen sind.

Da die Grundbacke mit dem angearbeiteten Ansatz unmittelbar in die Aufsatzspannbacke eingreift und somit keine Teile an den Backen angeschraubt sind, ist auch eine grosse Stabilität gegeben. Ausserdem ist die Bearbeitung des Ansatzes sowie der Ausnehmung, da eine hohe Massgenauigkeit nicht erforderlich ist, insbesondere wenn diese rotationssymmetrisch gestaltet werden, ohne grossen Aufwand möglich. Und da die Aufsatzspannbacke in radialer Richtung an dem Ansatz anliegt, sind stets ein exakter Rundlauf sowie eine hohe Wiederholspanngenauigkeit gewährleistet. Des weiteren ist von Vorteil, dass bei miteinander verbundenen Grund- und Aufsatzspannbacken kein Schmutz zwischen diese gelangen kann und dass der Ansatz sowie die Ausnehmung gegebenfalls leicht zu reinigen sind.

Durch die radiale Führung der Aufsatzspannbacke in dem Futterkörper ist nicht nur sichergestellt, dass der Aufsatzspannbacken verdrehfest gehalten ist, sondern auch, dass dieser bei einem Backenwechsel durch Einsetzen in die zugeordnete Führungsnut sofort exakt auf den Ansatz ausgerichtet ist. Ferner wird durch das Eingreifen der Aufsatzspannbacke in den Futterkörper die axiale Baulänge des Spannfutters reduziert und die Grundbacken wie auch die Aufsatzspannbacken können leicht gebaut werden, so dass dadurch die auftretenden Fliehkräfte zu vermindern sind.

Von besonderem Vorteil ist ferner, dass aufgrund der Ausgestaltung der Kuppelvorrichtung ohne weiteres, da lediglich die Bewegungsrichtung der Grundbacke umzukehren und die Aufsatzspannbacke um 180° zu drehen ist, von einer Innenspannung auf eine Aussenspannung umgestellt werden kann.

Durch die DE-PS 22 18 637 ist zwar ein Spannfutter mit auswechselbar an den Grundbacken befestigten Aufsatzspannbacken bekannt, diese sind hierbei aber jeweils in eine im Querschnitt rechteckige Aussparung, die in die Stirnfläche der Grundbacke eingearbeitet ist, eingesetzt. Des weiteren sind über die gesamte Breite der Grundbacke verlaufende Anschlagflächen in Form von Anschlagleisten vorgesehen, die am radial innenliegenden Ende der Grundbacke angeordnet sind. Mittels Klemmfedern sind die Aufsatzspannbacken bei Stillstand des leeren Spannfutters gehalten.

Da die auf die Aufsatzspannbacken einwirkenden Seitenkräfte nur von den Grundbacken, und zwar nur über einen Teil ihrer radialen Erstreckung abgestützt werden, ist dieses Spannfutter für hohe Spannkräfte nicht geeignet. Ausserdem treten aufgrund der Ausladung und Anordnung der Anschlagleisten am radial innenliegenden Ende der Grundbacke grosse Kippmomente auf, eine sichere Abstützung der Aufsatzspannbacke ist somit nicht gegeben. Des weiteren ist von Nachteil, dass dieses Spannfutter, da die Aufsatzspannbacken nicht umkehrbar sind, nur für eine Spannrichtung verwendet werden kann und dass dessen Spannbacken nur in einem begrenzten Spanndurchmesserbereich an die einzuspannenden Werkstücke angepasst werden können. Eine vielseitige Verwendarkeit ist somit nicht gegeben.

In der Zeichnung sind einige Ausführungsbeispiele der Einrichtung zur Koppelung einer Aufsatzspannbacke mit einer Grundbacke eines Spannfutters dargestellt, die nachfolgend im einzelnen erläutert sind. Hierbei zeigen:

Figur 1 ein Kraftspannfutter mit radial verschiebbaren Grundbacken, an denen Aufsatzspannbacken angekoppelt sind, im Axialschnitt,

Figur 2 einen Schnitt nach der Linie II-II der Figur 1,

Figur 3 einen Schnitt nach der Linie III-III der Figur 2,

Figur 4 das Kraftspannfutter nach dem Figur 1 in einem Schnitt nach Figur 2 mit andersartig ausgebildeten Verbindungsgliedern,

Figur 5 das Kraftspannfutter nach Figur 4 mit entkuppeltem Aufsatzspannbacken und

Figur 6 eine andersartige Ausgestaltung der an den Grundbacken und den Aufsatzspannbacken vorgesehenen Verbindungsgliedern.

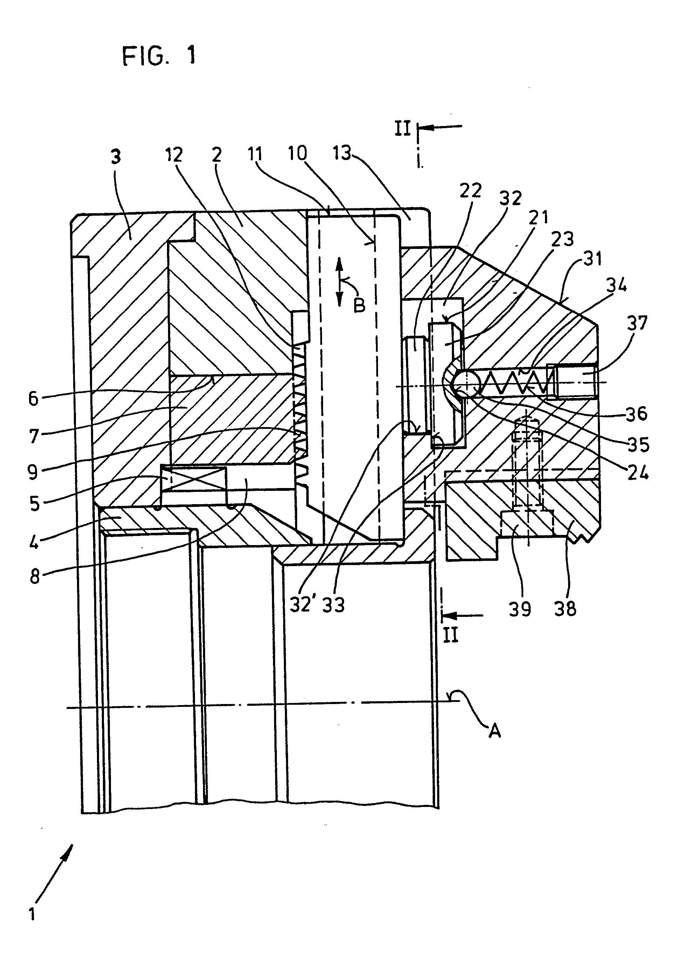

Das in Figur 1 dargestellte und mit 1 bezeichnete kraftbetätigte Spannfutter weist mehrere, vorzugsweise drei gleichmässig über den Umfang eines Futterkörpers 2 in radial gerichteten Nuten 10 verschiebbar geführte und in vor diesen angeordnete Ausnehmungen 13 hineinragende Grundbacken 11 auf, die von einem zentralen Verstellkolben 4 über Keilstangen 7 antreibbar sind. Dazu sind die in tangential gerichteten Ausnehmungen 6 des Futterkörpers 2, die durch einen Deckel 3 verschlossen sind, eingesetzten Keilstangen 7 jeweils mit einer Keilnut 8, in die der Verstellkolben 4 mit angeformten Nasen 5 eingreift, sowie mit einer Verzahnung 9, mit der eine an den Grundbacken 11 angearbeitete Verzahnung 12 in Eingriff ist, versehen. Auf diese Weise wird, da die Keilnuten 8 und die in diese eingreifenden Nasen in Achsrichtung geneigt sind, eine Axialverschiebung des Verstellkolbens 5 in eine Radialbewegung der Grundbacken 11 umgelenkt.

Auf die Grundbacken 11 ist jeweils ein Aufsatzspannbacken 31 aufgesetzt, die lösbar mit diesem verbunden sind. Dazu dient ein an dem Grundbacken 11 angearbeiteter Ansatz 21, der in eine in dem Aufsatzspannbacken 31 vorgesehen Aussparung 32 eingreift und mit diesem verrastbar ist. Der Ansatz 21 ist bei dem Ausführungsbeispiel nach den Figur 1 bis 3 aus einem Bolzen 22 mit kreisförmigen Querschnitt gebildet, an dessen freiem Ende ein in Form eines Bundes 23 ausgebildeter Vorsprung angeformt ist. Auch die Aussparung 32 ist rotationssymmetrisch und im Durchmesser grösser bemessen als der Bund 23, so dass der Ansatz 21 leicht in die Aussparung 32 eingeführt werden kann.

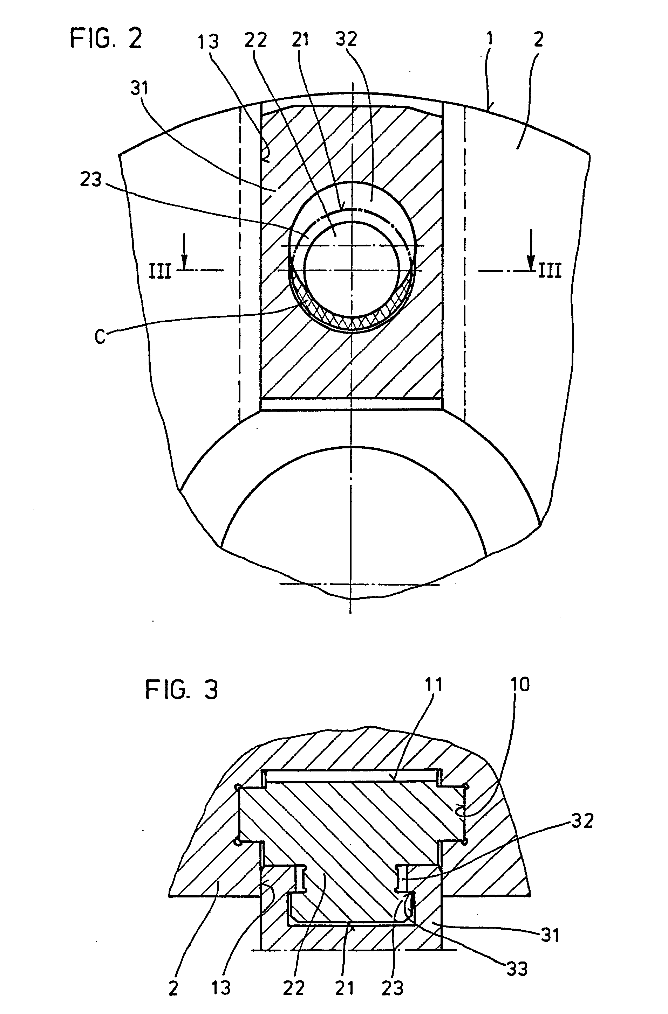

Zur Koppelung des an dem Grundbacken 11 angebrachten Ansatzes 21 mit dem Aufsatzspannbacken 31 ist die in diesen eingearbeitete Aussparung 32 auf einer der sich senkrecht zu der Verstellrichtung B des Grundbackens 11 erstreckenden Fläche mit einer Hinterschneidung 33 versehen, in die der Bund 23 des Ansatzes 21 eingreift und die durch eine kreisförmige Eindrehung gebildet ist. Auf diese Weise stützt sich in Koppelstellung der Bund 23 des Ansatzes 21 in dem in Figur 2 mit C bezeichneten Bereich an dem Aufsatzspannbacken 31 ab, so dass eine grosse achssenkrechte Abstützfläche geschaffen ist. Die Arretierung in radialer Richtung ist durch Anlage des Bolzens 22 an der vor der Hinterschneidung 33 liegenden Wandung 32' der Aussparung 32 gegeben. Ausserdem ist der Aufsatzspannbacken 31 in der Ausnehmung 13 seitlich geführt und dadurch drehfest gehalten. Durch die Führung des Aufsatzspannbackens 31 in der Ausnehmung 13 ergibt sich zwangsläufig eine Lagezuordnung der Aufsatzspannbacken 31, beim Einsetzen sind diese somit nicht gesondert auszurichten.

Zur Koppelung des Aufsatzspannbackens 31 mit dem Grundbacken 11 ist lediglich der Aufsatzspannbacken 31 in Achsrichtung A des Spannfutters 1 derart zu bewegen, dass der an dem Grundbacken 11 angeformte Ansatz 21 in die Aussparung 32 eingeführt wird. Sodann ist einer der Backen, zweckmässigerweise der Grundbacken 11 radial bis zur Anlage des Bundes 22 zu verschieben. Da sich die Abstützfläche der Hinterschneidung 32 auch in radialer Richtung erstreckt und der Aufsatzspannbacken 11 mit seiner dem Grundbacken 11 zugekehrten Stirnfläche an diesem abgestützt ist, können ohne Schwierigkeiten auch sehr hohe Kräfte übertragen werden. Ausserdem ist durch Verdrehen des Aufsatzspannbackens 31 um 180° leicht eine Umstellung von einer Aussenspannung auf eine Innenspannung, und zwar ohne dass bauliche Veränderungen oder sonstige Massnahmen zu treffen sind, vorzunehmen.

Um ein selbsttätiges Lösen des Aufsatzspannbackens 11 auszuschliessen, ist in diesen in eine Bohrung 34 eine Kugel 35 eingesetzt und in den Ansatz 21 des Grundbackens 11 ist eine kegelförmige Ausnehmung 24 eingearbeitet. In Koppelstellung rastet die Kugel 35, auf die eine sich an einer die Bohrung 34 verschliessenden Schraube 37 abstützende Feder 36 einwirkt, in die Ausnehmung 24 ein, so dass der Aufsatzspannbacken 31 sicher mit dem Grundbacken 11 verriegelt ist.

Der Aufsatzspannbacken 31 ist hierbei in Form einer Kassette ausgebildet, an der mittels Schrauben 39 ein Backeneinsatz 38 befestigt ist. Da der in Spannrichtung B abgestützte Backeneinsatz 38 somit leicht ausgewechselt werden kann, ist der Aufsatzspannbacken 31 ohne Schwierigkeiten an unterschiedliche Spanndurchmesser anpassbar.

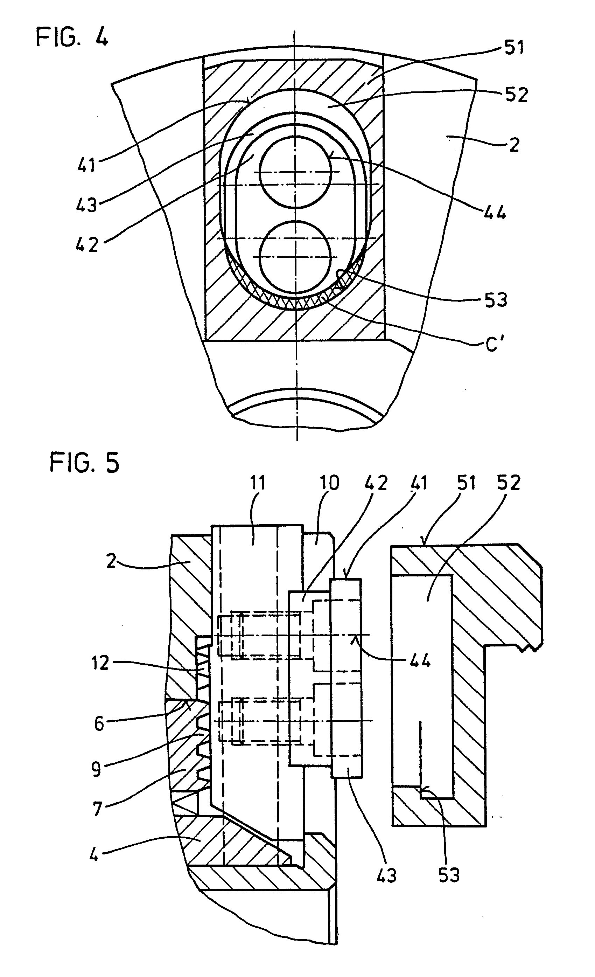

Bei dem Ausführungsbeispiel nach den Fig. 4 und 5 besteht der an dem Grundbacken 11 angebrachte Ansatz 41 aus einem Grundkörper 42 und einem an diesem angearbeiteten überstehenden Bund 43 als Vorsprung, die jeweils einen ovalen Querschnitt aufweisen. Der Ansatz 41 ist hierbei mittels Schrauben 44 an dem Grundbacken 11 befestigt. Die in den Aufsatzspannbacken 51 eingearbeitete Aussparung 52 ist in gleicher Weise, nur geringfügig grösser als der Bund 43 ausgebildet und mit einer Hinterscheidung 53 versehen, in die dieser bei gekoppeltem Aufsatzspannbacken 51 eingreift. Der Bereich, auf dem sich der Bund 43 an dem Aufsatzspannbacken 51 abstützt, ist in Figur 4 mit C' bezeichnet.

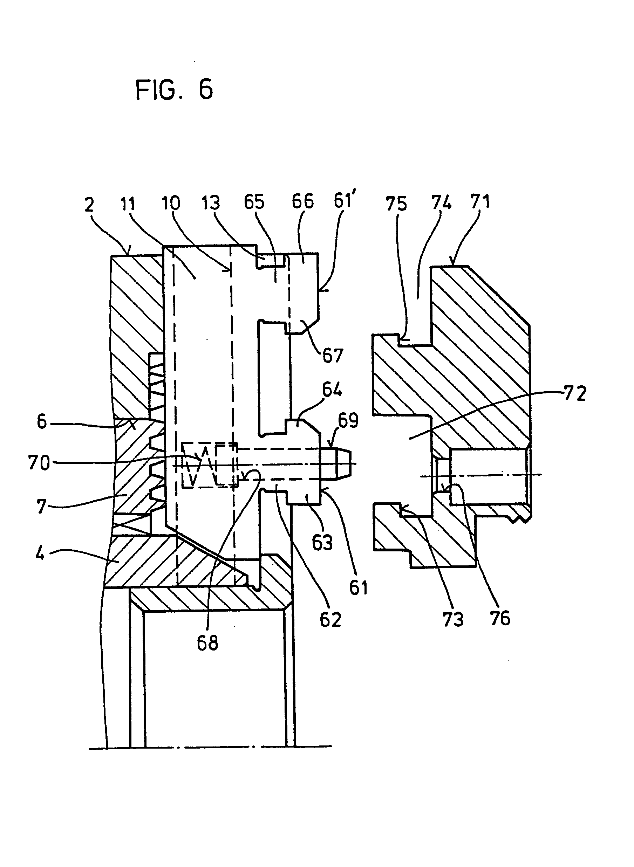

Bei dem Ausführungsbeispiel nach Fig. 6 ist der Grundbacken 11 mit zwei in Achsrichtung abstehenden Ansätzen 61 und 61' mit rechteckigem Querschnitt versehen, die jeweils aus einem Grundkörper 62 bzw. 65 und an diesen angebrachten nach innen und aussen abstehenden Vorsprügen 63 und 64 bzw. 67 und 66 bestehen. Der Aufsatzspannbacken 71 weist den Ansätzen 61 und 61' zugeordnete Aussparungen 72 und 74 auf, die mit Hinterschneidungen 73 bzw. 75 ausgestattet sind.

Wird der Aufsatzspannbacken 71 in der dargestellten Lage mit dem Grundbacken 11 gekoppelt, so rastet der Vorsprung 63 in die Hinterschneidung 73 und der Vorsprung 67 in die Hinterschneidung 75 ein. Wird dagegen der Aufsatzspannbacken 71 in der um 180° gedrehten Lage mit dem Grundbacken 11 verbunden, so hintergreifen der Vorsprung 64 die Hinterschneidung 75 und der Vorsprung 66 die Hinterschneidung 73. Durch die zweifache Verrastung ist gewährleistet, dass auch bei in radialer Richtung kurz ausgebildeten Vorsprüngen und Hinterschneidungen eine sichere Halterung der Aufsatzspannbacken gewährleistet ist.

Zur Verriegelung des Aufsatzspannbackens 71 dient bei diesem Ausführungsbeispiel ein in einer Bohrung 68 des Grundbackens 11 eingesetzter Rastbolzen 69, auf den eine Feder 70 einwirkt und der in Koppelstellung in eine in den Aufsatzspannbacken 71 eingearbeitete Bohrung 76 eingreift.

## Patentansprüche

1. Spannfutter (1) mit im Futterkörper (2) verstellbar geführten Grundbacken (11), die durch eine Radialverschiebung mit zugeordneten Aufsatzspannbacken (31) formschlüssig verbindbar sind dadurch gekennzeichnet, dass die Grundbacke (11) einen in Achsrichtung des Futterkörpers (2) abstehenden etwa mittig angeordneten, vorzugsweise zylindrisch ausgebildeten Ansatz (21; 41; 61) aufweist, an dem eine Anschlagfläche (22; 42; 62) sowie ein achssenkrecht nach innen und aussen abstehender Vorsprung in Form einer Rastnase (23; 43; 63; 64) angebracht ist, dass in die Aufsatzspannbacke (31; 51; 71) eine den Ansatz (21; 41; 61) aufnehmende langlochartige, seitlich geschlossene Aussparung (32; 52; 72) eingearbeitet ist, die auf einer der sich senkrecht zu der Verstellrichtung der Grundbacke (11) erstreckenden Flächen mit einer den Vorsprung (23; 43; 63; 64) des Ansatzes (21; 41; 61) aufnehmenden Hinterschneidung (33; 53; 73) und mit einer mit der Anschlagfläche (22; 42; 62) des Ansatzes (21; 41; 61) zusammenwirkenden Gegenfläche (32') versehen ist, und dass die Aufsatzspannbacke (31; 51; 71) in einer in den Futterkörper (2) eingearbeiteten Nut, vorzugsweise in der die Grundbacke (11) aufnehmenden Ausnehmung (13) des Futterkörpers (2), und/oder in einer in die Grundbacke (11) eingearbeiteten, parallel zur Nut (10) im Futterkörper (2) verlaufenden Nut drehfest geführt ist.

2. Einrichtung nach Anspruch 1, dadurch gekennzeichnet, dass zur Arretierung der Aufsatzspannbacke (31; 71) in Koppelstellung in diese und/oder die Grundbacke eine durch die Kraft einer Feder (36; 70) axial verstellbare Kugel (35), ein Stift (69) oder dgl. eingesetzt und in eine in die andere Backe (21; 71) eingearbeitete Ausnehmung (24; 76) einrastbar ist.

3. Einrichtung nach Anspruch 1 oder 2, dadurch gekennzeichnet, dass der an der Grundbacke (11) angebrachte Ansatz (21; 41) durch einen angearbeiteten oder an der Grundbacke (11) befestigten Bolzen (22) mit kreisförmigem Querschnitt ider durch einen Grundkörper (42) mit ovalem Querschnitt gebildet ist und dass der parallel zur Grundbacke (11) gerichtete Vorsprung durch einen von diesem abstehenden kreis- oder halbkreisförmigen Bund (23; 43) mit kreisförmigem oder ovalem Querschnitt gebildet ist.

4. Einrichtung nach Anspruch 3, dadurch gekennzeichnet, dass die den Bund (23) des Ansatzes (21) teilweise aufnehmende Hinterschneidung (33) der in die Aufsatzspannbacke (31) eingearbeiteten Aussparung (32) durch eine kreisförmige Eindrehung gebildet ist.

5. Einrichtung nach Anspruch 1 oder 2, dadurch gekennzeichnet, dass der an der Grundbacke (11) angebrachte Ansatz(61) und der von diesem abstehende Vorsprung (63, 64) im Querschnitt rechteckig ausgebildet sind.

6. Einrichtung nach einem oder mehreren der Ansprüche 1, 2 oder 5, dadurch gekennzeichnet, dass die Grundbacke (11) zwei in Achsrichtung abstehende mit seitlichem Abstand zueinander angeordnete Ansätze (61, 61') und an diese angeformte Vorsprünge (63, 64 bzw. 66, 67) aufweist und dass die Aufsatzspannbacke (71) mit diese Vorsprünge (63, 64 bzw. 66, 67) aufnehmenden Hinterschneidungen (73, 75) versehen ist.

7. Einrichtung nach einem oder mehreren der Ansprüche 1 bis 6, dadurch gekennzeichnet, dass die Aufsatzspannbacke (31) in Form einer Kassette ausgebildet ist, an der ein in Spannrichtung (B) abgestützter Backeneinsatz (38) auswechselbar befestigt ist.

## Revendications

1. Mandrin de serrage (1) avec machoires de base (11) réglables, guidées dans le corps de mandrin (2) combinables mécaniquement avec les machoires de serrage rapportées (31) par déplacement radial ainsi désigné, de sorte que la machoire de base (11) présente un épaulement cylindrique (21;, 41; 61) situé au centre, dépassant dans le sens axial du corps de mandrin (2) sur lequel se trouve une surface de butée (22; 42; 62) ainsi qu'une saillie extérieure et intérieure perpendiculaire à l'axe ayant la forme d'un nez de verrouillage (23; 43; 63; 64) de sorte que dans la machoire de serrage rapportée (31; 51; 71), il est usiné un évidement fermé (32; 52; 72), latéral du type oblong supportant l'épaulement (21; 41; 61); l'évidement agit avec une surface se développant perpendiculairement au sens de réglage de la machoire de base (11) avec une contre-dépouille (33; 53; 73) supportant la saillie (23; 43; 63; 64) de l'épaulement (21; 41; 61) ainsi qu'avec une contre-surface (32') agissant avec la surface de butée (22; 42; 62) de l'épaulement (21; 41; 61) de sorte que la machoire de serrage rapportée (31; 51; 71) est guidée par une gorge usinée dans le corps de mandrin (2). De préference, cette machoire est guidée avec creux-support (13) et/ou avec une gorge se développant parallèlement à la rainure (10) du corps de mandrin (2) usinée dans la machoire de base (11).

2. Equipement selon le droit 1, ainsi désigné, de sorte que pour le blocage de la machoire de serrage rapportée (31; 71), dans la position d'accouplement dans celle-ci et/ou dans la machoire de base, il est placé une broche (69) ou similaire ou une bille (35) déplacable axialement sous l'effet de la force d'un ressort (36; 70) qui est verrouillable dans un évidement (24; 76) usiné dans l'autre machoire (21; 71).

3. Equipement selon le droit 1 ou 2, ainsi désigné, de sorte que l'épaulement (21; 41; placé sur la machoire de base (11) est formé par une axe fixe (22) usiné ou fixé à la machoire de base (11) de section circulaire ou par un corps de base (42) de section ovale, de sorte que l'épaulement dirigé parallèlement à la machoire de base (11) est formé par un collet (23; 43) circulaire ou demi circulaire dépassant de celui-ci, avec section circulaire ou ovale.

4. Equipement selon le droit 3, ainsi désigné, de sorte que le contre-dépouille (33) supportant partiellement le collet (23) de l'épaulement (21) qui est formé par un lamage circulaire dans l'évidement (32) usiné dans la machoire de serrage rapportée (31).

5. Equipement selon le droit 1 ou 2, ainsi désigné, de sorte que l'épaulement (61) de la machoire de base (11) et la saillie (63; 64) dépassant sont conçus de façon rectangulaire dans la section.

6. Equipement selon un ou plusieurs des droits 1, 2 ou 5, ainsi désigné, de sorte que la machoire de base (11) présente deux épaulements (61; 61') disposés avec un écartement latéral, l'un par rapport à l'autre, dépassant dams le sens de l'axe et les saillies (63; 64; ou 66, 67) formées sur celle-ci. La machoire de serrage rapportée (71) est munie de contre-dépouilles (73, 75) supportant les saillies (63, 64 ou 66, 67).

7. Equipement selon un ou plusieurs des droits 1 à 6, ainsi désigné, de sorte que la machoire de serrage rapportée (31) est conçue sous la forme d'une cassette sur laquelle est fixé une garniture de machoire (38) remplaçable dans le sens de serrage (B).

## Claims

1. Chuck (1) with main jaws (11) adjustably guided in the jaw body (2) which main jaws are connectable by shape with adjoint additional jaws (31) by means of radial shifting, characterized in that the main jaw (11) has a collar (21; 41; 61) extending in the line of the axis of the jaw body (2) and is mainly located concentric preferably having a cylindrical shape, to which collar a stop surface (22; 42; 62) and an extension in shape of a stop lug (23; 43; 63, 64) is mounted, that in the additional jaw (31; 51; 71) an opening (32; 52; 72) in the shape of an oblong hole being closed at the side surrounding the collar (21; 41; 61) is provided, which opening has a ledge (33; 53; 53;) taking over the lug (23; 43; 63, 64) of the collar (21; 41; 61) at the surface being normal to the adjusting direction of the main jaw (11) and further having a counter surface (32') co-operating with the stop surface (22; 42; 62) of the collar (21; 41; 61), and that the additional jaw (31; 51; 71) ist rotationally guided in a groove in the jaw body (2), preferably in the opening (13) of the jaw body (2) with the main jaw (11) and/or is guided in a groove in the main jaw (11) and located parallel to the groove (10) in the jaw body (2).

2. Device of claim 1, characterized in that in order to lock the additional jaw (31; 71) when linked into same and/or into the main jaw a bowl (35) axially adjustable by a spring (36; 70), a pin (69) or the like is inserted and may be rested into an opening (24; 76) in the other jaw (21; 71).

3. Device of claim 1 or 2, characterized in that the collar (21; 41) fixed to the main jaw (11) is formed by a bolt (22) mounted to the main jaw (11) which bolt has a round cross-section or that the collar is formed by a main body (42) having oval cross-section and that the extension directed parallel to the main jaw (11) is formed by a collar (23; 43) being round or semicircular and having circular or semicircular cross-section.

4. Device of claim 3, characterized in that the ledge (33) partly co-operating with the collar (23) of the collar (21) being part of the opening (32) in the additional jaw (31) is formed by a circular hole.

5. Device of claim 1 or 2, characterized in that the collar (61) mounted to the main jaw (11) and the stop lug (63; 64) extending from the collar have rectangular cross-section.

6. Device of one or more of the claims 1, 2 or 5, characterized in that the main jaw (11) has two collars (61, 61') extending in the direction of the axis and located with lateral space between each other and has extensions (63, 64 or 66, 67 respectively) extending thereof and that the additional jaw (71) has lugs (73, 75) surrounding the extensions (63, 64 or 66, 67 respectively).

7. Device of one or more of the claims 1 through 6, characterized in that the additional jaw (31) is shaped as a box to which a jaw insert (38) is exchangeably mounted biased in direction of tightening.

FIG. 1

0 139 129

FIG. 2

FIG. 3

9

FIG. 4

51

52

2

41

43

42

44

53

C'

FIG. 5

11 10 42 41 51 52

2

12

6

9

7

44

4

43 53

## FIG. 6